# EUROPÄISCHE PATENTSCHRIFT

(11) **EP 2 410 205 B1**
(45) Veröffentlichungstag und Bekanntmachung des Hinweises auf die Patenterteilung: **31.10.2012**
(21) Anmeldenummer: 10007667.8
(22) Anmeldetag: 23.07.2010
(51) Int. Cl.: F16G 3/04

(54) **Verbinderelement zum Befestigen an einem Ende eines Fördergurts**
Connector element for fixing to an end of a conveyor belt
Elément de connecteur pour la fixation sur une extrémité d'une courroie de transport

(43) Veröffentlichungstag der Anmeldung: 25.01.2012
(73) Patentinhaber: MATO Maschinen- und Metallwarenfabrik Curt Matthaei GmbH & Co KG, 63071 Offenbach (DE)
(72) Erfinder: Herold, Wolfgang, 63075 Offenbach (DE)
(74) Vertreter: Quermann, Helmut

(56) Entgegenhaltungen:
- EP-A1- 1 338 825
- EP-A1- 2 123 934
- GB-A- 102 339
- GB-A- 440 514

## Beschreibung

Die Erfindung betrifft ein Verbinderelement zum Befestigen an einem Ende eines Fördergurts, mit einzelnen, nebeneinander angeordneten Drahthaken, wobei der jeweilige Drahthaken einen Ösenbereich, sich an diesen anschließende Schenkel und sich an die Schenkel anschließende abgewinkelte Spitzen aufweist, sowie mit einem streifenförmigen Träger für die Drahthaken, wobei der Träger mit parallel zueinander angeordneten Schlitzen zur Aufnahme der Drahthaken versehen ist, wobei der jeweilige Drahthaken in seinem Ösenbereich im Schlitz gefasst ist, sowie mit einer auf der den Schenkeln der Drahthaken zugewandten Seite des Trägers auf diesen aufgebrachten Klebeschicht.

Zu Verbinden zweier Enden eines Fördergurts wird mit dem jeweiligen Ende des Fördergurts ein Verbinderelement befestigt. Nach dem Verbinden der Verbinderelemente mit den Gurtenden werden diese mit ihren Osenbereichen in kämmende Anordnung gebracht und in den Überlappungsbereich ein Kupplungsstab eingesteckt, so dass eine sichere Verbindung der beiden Gurtenden hergestellt ist.

Voraussetzung für ein definiertes Anbringen der Drahthaken am jeweiligen Ende des Fördergurts ist es, dass die Drahthaken in einer definierten parallelen Anordnung zueinander positioniert sind, dies vom Zeitpunkt der Herstellung bis zum Zeitpunkt der Befestigung am Gurtende. Solches erfolgt in den meisten Fällen mittels eines Querdrahtes, der mit den einzelnen Drahthaken verbunden ist und diese damit wie gewünscht zueinander positioniert. Eine solche Anordnung ist beispielsweise in der EP 1 338 825 A1 beschrieben.

Alternative Anordnungen in den Dokumenten GB 102 339 und GB 440 514 offenbart.

Es kann erwünscht sein, diese Drahthaken nach dem Anbringen am Ende des Fördergurts abzudecken, um entweder die metallischen Drahthaken vor Verschleiß durch mittels der Gurte transportiertes Gut zu schützen oder zu gewährleisten, dass das transportiere Gurt durch die Drahthaken nicht beschädigt wird. So besteht insbesondere dann, wenn der Gurt in Art einer Mulde bewegt wird und/oder eine Vielzahl von Umlenkrollen passieren muss, die Gefahr, dass der eine oder andere Drahthaken bricht bzw., bei einer Verbindung unter Verwendung eines Querdrahtes zum Positionieren der Drahthaken zueinander, dieser bricht und herausgebrochene Enden der Drahthaken über die Transportebene des Gurtes hinausstehen.

Ein Verbinderelement zum Befestigen an einem Ende eines Fördergurts, das gemäß den Merkmalen der eingangs genannten Art ausgebildet ist, ist in der EP 1 338 825 A1 beschrieben. Bei dem konkret veranschaulichten Ausführungsbeispiel findet ein Querdraht zum Positionieren der Drahthaken Verwendung und es sind die Drahthaken vor dem Anbringen des Verbinderelements am Ende des Fördergurts nur in Kontakt mit dem streifenförmigen Träger im Bereich dessen parallel zueinander angeordneter Schlitze. Erst beim Anbringen des Verbinderelements am Gurtende, somit, wenn sich die Zustellbacken einer Klemmvorrichtung zum Verformen der Drahthaken schließen, kontaktiert die Klebeschicht, die auf den Träger aufgebracht ist, die Schenkel der Drahthaken und deckt diese sowie den den abgewinkelten Spitzen der Drahthaken benachbarten Bereich des Fördergurts vollständig ab.

Für einen entsprechenden Anwendungszweck ist in der WO 2007/025567 A1 ein Verbinderelement beschrieben, bei dem kein Querdraht zum Positionieren der einzelnen Drahthaken Verwendung findet. Stattdessen ist der Träger nicht nur mit einer Reihe von Schlitzen, sondern drei parallel angeordneten Reihen von Schlitzen versehen, wobei die Schlitze in der mittleren Reihe die Drahthaken in deren Ösenbereichen durchsetzen und die Schlitze der äußeren Reihen die Schenkel der Drahthaken durchsetzen. Hierdurch ist jeder Drahthaken im Bereich von drei Schlitzen gefasst. Auch bei diesem Verbinderelement ist der Träger auf seiner dem Gurt zugewandten Seite mit einer Klebeschicht versehen, die bei dem Anbringen des Verbinderelements am Fördergurt diesen kontaktiert. Allerdings deckt der Träger aufgrund dessen Ausbildung mit drei Schlitzreihen die Drahthaken im Bereich der beiden äußeren Schlitzreihen nicht vollständig ab.

Ein Verbinderelement zum Befestigen an einem Ende eines Fördergurts, das gemäß den Merkmalen des Oberbegriffs des Patentanspruchs 1 ausgebildet ist, ist aus der GB 102,339 bekannt.

Aufgabe der vorliegenden Erfindung ist es, ein Verbinderelement der eingangs genannten Art zu schaffen, bei dem die Drahthaken, vor dem Anbringen des Verbinderelements am Gurtende, ohne Querdrahtfassung und ohne zusätzliche Schlitze im Träger zur Aufnahme der Schenkel der Drahthaken, sicher gehalten werden.

Gelöst wird die Aufgabe durch ein Verbinderelement, das gemäß den Merkmalen des Patentanspruchs 1 ausgebildet ist.

Wesentlich ist bei dem erfindungsgemäßen Verbinderelement somit, dass bereits vor dem Befestigen des Verbinderelements an dem Fördergurtende sich der Träger mit Klebeschicht in einer Position befindet, in der die Schenkel der Drahthaken vollständig von Träger und Klebeschicht abgedeckt sind. Die Klebeschicht kontaktiert somit die Drahthaken im Bereich deren Schenkel. Gemäß der Erfindung erfolgt diese Kontaktierung der Schenkel der Drahthaken dadurch, dass sie in die Klebeschicht formschlüssig eingebettet sind. Aufgrund dieser formschlüssigen Einbettung werden die Schenkel der Drahthaken und damit die Drahthaken selbst sicher bezüglich des Trägers gehalten, im Zusammenwirken mit der in die Schlitze im Träger eingesteckten Position. Somit ist nach der Herstellung des Verbinderelements, dann, wenn eine Vielzahl von Verbinderelementen verpackt und gelagert werden und zur Versendung an den Verwender bereit stehen, gewährleistet, dass Träger und Drahthaken eine definierte, sichere Position zueinander einnehmen. Es ist demnach nicht erforderlich, eine Verbindung der Drahthaken mittels Querdraht oder zusätzliche Schlitze im Träger zur Positionierung der Schenkel der Drahthaken vorzusehen. Dadurch, dass die Klebeschicht wulstartig den Schenkel des jeweiligen Drahthakens auf abgewandten Seiten des Schenkels umgibt, ist die sichere Positionierung des jeweiligen Drahthakens im Träger und damit aller Drahthaken im Träger gewährleistet. Ein Kippen der Drahthaken um die Achse der Schlitze in den Trägern wird durch diese formschlüssige Einbettung der Drahthaken in die Klebeschicht wirksam verhindert.

Ein besonders sicherer Formschluss zwischen Drahthaken und Klebeschicht ergibt sich, wenn der Drahthaken eine Querschnittsform aufweist, die besonders gut geeignet ist, den Formschluss herbeizuführen. Eine solche Querschnittsform, die besonders einfach herzustellen ist, ist eine rechteckige Querschnittsform des Drahthakens. Ist, ausgehend von der Klebeschicht die Höhe des Drahthakens geringer als die Breite des Drahthakens, ergibt sich eine relativ große Aufstandsfläche des Schenkels des Drahthakens bezüglich der Klebeschicht oder aber des Trägers. Letzteres dann, wenn beim Herstellen des Verbinderelementes der jeweilige Schenkel mit relativ großem Druck in die Klebeschicht bis zum Träger gedrückt wird und die Verformung der Klebeschicht bewirkt, dass sich seitlich des jeweiligen Schenkels die formschlüssige Einbettung des Schenkels in der Klebeschicht ergibt. - Der jeweilige Drahthaken kann durchaus auch eine andere Querschnittsform aufweisen, z.B. eine Kreisform.

Die Klebeschicht sollte im Bereich der einzelnen Schenkel zumindest bis über den Halbmesser des Schenkelquerschnitt aufgewulstet sein. Je weiter sich der Wulst vom Träger weg erstreckt, umso besser ist der Halt des jeweiligen Drahthakens im Bereich seiner beiden Schenkel.

Um die Haftung zwischen Klebeschicht und Schenkeln der Drahthaken weiter zu verbessern, ist gemäß einer vorteilhaften Weiterbildung der Erfindung vorgesehen, dass die Schenkel der Drahthaken mit einem Haftmittel, insbesondere einem Primer versehen sind.

Bei dem streifenförmigen Träger handelt es sich vorzugsweise um einen Textilstreifen oder Kunststoffstreifen. Insbesondere findet das Verbinderelement bei Fördergurten für Wäschereimaschinen Verwendung. Bei diesen sind eine Vielzahl nebeneinander angeordneter Fördergurte vorgesehen, die dem Fördern von Wäschestücken dienen. Die Wäschestücke, bei denen es sich beispielsweise um Handtücher aus Frottee handelt, werden so einer Bügelstation und anschließend einer Faltstation zugeführt.

Vorzugsweise ist die Klebeschicht durch einen Kleber gebildet, der ein Schmelzkleber, insbesondere ein thermoplastischer Schmelzkleber ist. Weitere Merkmale der Erfindung sind in den Unteransprüchen, der Beschreibung der Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand eines Ausführungsbeispieles dargestellt, ohne hierauf beschränkt zu sein. Es stellt dar:
- Figur 1: eine Seitenansicht des erfindungsgemäßen Verbinderelements,
- Figur 2: eine Draufsicht des in Figur 1 gezeigten Verbinderelements,
- Figur 3: Schnitte A-A gemäß Figur 1, wobei bezüglich der Drahthaken die abgewinkelten Spitzen nicht mit veranschaulicht sind.

Das in den Figuren gezeigte Verbinderelement 1 dient dem Befestigen an einem Ende eines nicht veranschaulichten Fördergurts. Insofern wird ergänzend auf die Offenbarung der EP 1 338 825 A1 verwiesen.

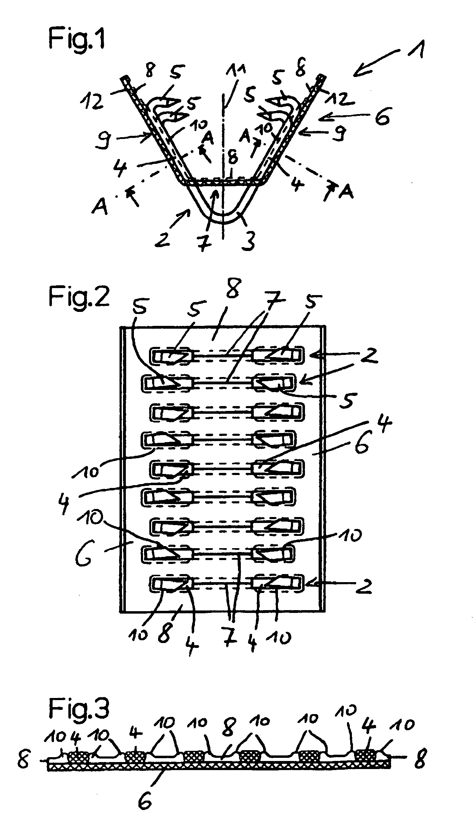

Das Verbinderelement 1 weist einzelne, parallel nebeneinander angeordnete Drahthaken 2, konkret für den gemäß dem Ausführungsbeispiel dargestellten Abschnitt neun Drahthaken 2 auf. Der jeweilige Drahthaken 2 weist einen Ösenbereich 3, sich an diesen anschließende, ungleich lange Schenkel 4 und sich an die Schenkel 4 anschließende, abgewinkelte Spitzen 5 auf. Die beiden Spitzen des jeweiligen Drahthakens 2 sind aufeinander zu gerichtet. Die beiden Schenkel 4 schließen einen spitzen Winkel miteinander ein, ferner schließt der jeweilige Schenkel 4 und die diesem zugeordnete Spitze 5 einen spitzen Winkel zueinander ein. Die Drahthaken 2 sind alternierend angeordnet, d.h., auf die jeweilige Hälfte des Drahthakens 2 bezogen folgt einem kurzen Schenkel des einen Drahthakens ein langer Schenkel des anderen Drahthakens. Der jeweilige Drahthaken 2 weist im Wesentlichen rechteckigen Querschnitt auf. Insbesondere der Schnittdarstellung der Drahthaken 2 gemäß Figur 3 ist zu entnehmen, dass die kürzeren Seiten etwas nach außen gewölbt gestaltet sind, so dass die Querschnittsform des Drahthakens nur im Wesentlichen rechteckig ist. Das Verbinderelement 1 weist ferner einen streifenförmigen Träger 6 zur Aufnahme der Drahthaken 2 auf. Bei dem streifenförmigen Träger 6 handelt es sich insbesondere um einen Textilstreifen. Hierbei ist der Träger 6 mit einer der Anzahl der aufzunehmenden Drahthaken 2 entsprechenden Anzahl parallel zueinander angeordneter Schlitze 7 versehen. Der jeweilige Drahthaken 2 ist in seinem Ösenbereich 3 in den zugeordneten Schlitz 7 eingesetzt und damit von diesem gefasst. Auf der den Schenkeln 4 zugewandten Seite des Trägers 6 ist auf diesen eine Klebeschicht 8 aufgebracht. Hierbei handelt es sich insbesondere um einen thermoplastischen Schmelzkleber. Die Schenkel 4 der Drahthaken 2 sind zumindest auf ihrer der Klebeschicht 8 zugewandten Seite und auch auf ihrer dem benachbarten Drahthaken 2 zugewandten Seite mit einem Haftmittel, insbesondere einem Primer versehen.

Beim letzten Herstellungsvorgang des Verbinderelements werden, nachdem die Drahthaken 2 in die Schlitze 7 des Trägers 6 eingesteckt sind, die äußeren Abschnitte 9 des Trägers 6, bei Erwärmung des Trägers 6 zumindest im Bereich dieser äußeren Abschnitte 9 und Erwärmung der Drahthaken 2, gegen die mit dem Haftmittel versehenen Schenkel 4 der Drahthaken 2 gedrückt, wobei sich aufgrund der Erwärmung die thermoplastische Klebeschicht 8 verformt und die Schenkel 4 der Drahthaken 2 in die Klebeschicht 8 formschlüssig eingebettet werden. Es bilden sich hierbei im Bereich der einzelnen Schenkel 4 Wulste 10 aus, wobei die Klebeschicht zumindest bis über den Halbmesser des Schenkelquerschnitts des jeweiligen Schenkels 4 aufgewulstet ist, wie es anschaulich der Figur 3 zu entnehmen ist. Der Träger 6 deckt somit einerseits die Schenkel 4 auf deren Außenseite, somit deren der Achse 11 abgewandten Seite vollständig ab und ragt mit den Enden 12 über die den Spitzen 5 zugewandten Enden der Schenkel 4 der Drahthaken 2 hinaus. Gehalten wird der jeweilige Drahthaken 2 somit, vor dem Befestigen des Verbinderelements 1 am Ende des Fördergurts, in dem diesem Drahthaken 2 zugeordneten Schlitz 7, ferner durch die im Bereich des jeweiligen Schenkels 4 beidseitig dieses Schenkels angeordneten Wülste 10. Diese beidseitigen Wülste verhindern einerseits ein Kippen des Drahthakens 2 um die Schlitzachse und überdies stellt die Verklebung zwischen Schenkel 4 und Klebeschicht 8 sicher, dass sich der Schenkel 4 nicht von der Klebeschicht 8 und dem Träger 6 lösen kann, in einer Richtung in Erstreckung der Spitzen 5.

Wird das Verbinderelement 1 am Ende eines Fördergurts angebracht, werden in bekannter Art und Weise durch Druckausübung auf das Verbinderelement 1 die Schenkel 4 aufeinander zu bewegt und es greifen die Spitzen 1 in den Fördergurt ein, zum Herstellen der Verbindung von Verbinderelement 1 und Fördergurt. Dieses Verbinden erfolgt unter Einwirkung von Wärme, wobei der thermoplastische Kleber sich verformt und, bei vollständiger Abdeckung der Schenkel 4 der Drahthaken durch den Träger 6, der Träger 6 sich mit dem Fördergurt verbindet - auch im Bereich dessen Enden 12 - und hierbei auch die Schenkel 4 vollständig abdeckt.

## Patentansprüche

1. Verbinderelement (1) zum Befestigen an einem Ende eines Fördergurts, mit einzelnen, nebeneinander angeordneten Drahthaken (2), wobei der jeweilige Drahthaken (2) einen Ösenbereich (3), sich an diesen anschließende Schenkel (4) und sich an die Schenkel (4) anschließende abgewinkelte Spitzen (5) aufweist, sowie mit einem streifenförmigen Träger (6) für die Drahthaken (2), wobei der Träger (6) mit parallel zueinander angeordneten Schlitzen (7) zur Aufnahme der Drahthaken (2) versehen ist, wobei der jeweilige Drahthaken (2) in seinem Ösenbereich (3) im Schlitz (7) gefasst ist, wobei der Träger (6) die Schenkel (4) der Drahthaken (2) auf den einander abgewandten Seiten der Schenkel (4) des jeweiligen Drahthakens (2) vollständig abdeckt, **dadurch gekennzeichnet, dass** der Träger (6) mit einer auf der den Schenkeln (4) der Drahthaken (2) zugewandten Seite des Trägers (6) auf diesen aufgebrachten Klebeschicht (8) versehen ist, und, dass die Schenkel (4) der Drahthaken (2) in die Klebeschicht (8) formschlüssig eingebettet sind

2. Verbinderelement nach Anspruch 1, **dadurch gekennzeichnet, dass** die Drahthaken (2) im Wesentlichen rechteckigen oder kreisförmigen Querschnitt aufweisen.

3. Verbinderelement nach Anspruch 1 oder 2, **dadurch gekennzeichnet, dass** die Schenkel (4) des jeweiligen Drahthakens (2) ungleich lang sind.

4. Verbinderelement nach einem der Ansprüche 1 bis 3, **dadurch gekennzeichnet, dass** der streifenförmige Träger (6) ein Textilstreifen oder Kunststoffstreifen ist.

5. Verbinderelement nach einem der Ansprüche 1 bis 4, **dadurch gekennzeichnet, dass** die Schenkel (4) der Drahthaken (2) mit einem Haftmittel, insbesondere einem Primer, versehen sind.

6. Verbinderelement nach einem der Ansprüche 1 bis 5, **dadurch gekennzeichnet, dass** die Klebeschicht (8) im Bereich der einzelnen Schenkel (4) zumindest bis über den Halbmesser des Schenkelquerschnitts aufgewulstet ist.

7. Verbinderelement nach einem der Ansprüche 1 bis 6, **dadurch gekennzeichnet, dass** die Klebeschicht (8) durch einen Kleber gebildet ist, der ein Schmelzkleber, insbesondere ein thermoplastischer Schmelzkleber ist.

## Claims

1. Connector element (1) for fixing to an end of a conveyor belt, with individual wire hooks (2) arranged next to one another, the respective wire hook (2) having an eyelet region (3), legs (4) adjoining the latter, and angled tips (5) adjoin the legs (4), and with a strip-shaped carrier (6) for the wire hooks (2), the carrier (6) being provided with slots (7), arranged parallel to one another, for receiving the wire hooks (2), the respective wire hook (2) being caught in its eyelet region (3) in the slot (7), the carrier (6) completely covering the legs (4) of the wire hooks (2) on the sides, facing away from one another, of the legs (4) of the respective wire hook (2), **characterized in that** the carrier (6) is provided with an adhesive layer (8) applied to the carrier (6) on that side of the latter which faces the legs (4) of the wire hooks (2), and **in that** the legs (4) of the wire hooks (2) are embedded positively into the adhesive layer (8).

2. Connector element according to Claim 1, **characterized in that** the wire hooks (2) have an essentially rectangular or circular cross section.

3. Connector element according to Claim 1 or 2, **characterized in that** the legs (4) of the respective wire hook (2) are of unequal length.

4. Connector element according to one of Claims 1 to 3, **characterized in that** the strip-shaped carrier (6) is a textile strip or plastic strip.

5. Connector element according to one of Claims 1 to 4, **characterized in that** the legs (4) of the wire hooks (2) are provided with a bonding agent, in particular with a primer.

6. Connector element according to one of Claims 1 to 5, **characterized in that** the adhesive layer (8) is rolled on in the region of the individual legs (4) at least as far as over half the diameter of the leg cross section.

7. Connector element according to one of Claims 1 to 6, **characterized in that** the adhesive layer (8) is formed by an adhesive which is a hot-melt adhesive, in particular a thermoplastic hot-melt adhesive.

## Revendications

1. Elément de connecteur (1) pour la fixation à une extrémité d'une courroie de transport, comprenant des crochets en fil métallique (2) individuels disposés les uns à côté des autres, chaque crochet en fil métallique (2) présentant une région d'oeillet (3), des branches (4) se raccordant à celle-ci et des pointes (5) coudées se raccordant aux branches (4), et comprenant un support en forme de ruban (6) pour les crochets en fil métallique (2), le support (6) étant pourvu de fentes (7) disposées parallèlement les unes aux autres pour recevoir les crochets en fil métallique (2), chaque crochet en fil métallique (2) étant introduit dans sa région d'oeillet (3) dans la fente (7), le support (6) recouvrant complètement les branches (4) des crochets en fil métallique (2) sur les côtés opposés des branches (4) du crochet en fil métallique respectif (2), **caractérisé en ce que** le support (6) est pourvu d'une couche de colle (8) appliquée sur le support (6), du côté de celui-ci tourné vers les branches (4) des crochets en fil métallique (2), et **en ce que** les branches (4) des crochets en fil métallique (2) sont incorporées par engagement par correspondance géométrique dans la couche de colle (8).

2. Elément de connecteur selon la revendication 1, **caractérisé en ce que** les crochets en fil métallique (2) présentent essentiellement une section transversale rectangulaire ou circulaire.

3. Elément de connecteur selon la revendication 1 ou 2, **caractérisé en ce que** les branches (4) du crochet en fil métallique respectif (2) n'ont pas les mêmes longueurs.

4. Elément de connecteur selon l'une quelconque des revendications 1 à 3, **caractérisé en ce que** le support (6) en forme de ruban est un ruban textile ou un ruban en plastique.

5. Elément de connecteur selon l'une quelconque des revendications 1 à 4, **caractérisé en ce que** les branches (4) des crochets en fil métallique (2) sont pourvues d'un moyen adhésif, notamment d'une couche d'apprêt.

6. Elément de connecteur selon l'une quelconque des revendications 1 à 5, **caractérisé en ce que** la couche de colle (8) est boudinée dans la région des branches individuelles (4) au moins jusqu'au rayon de la section transversale des branches.

7. Elément de connecteur selon l'une quelconque des revendications 1 à 6, **caractérisé en ce que** la couche de colle (8) est formée par un adhésif qui est un adhésif thermofusible, notamment un adhésif thermofusible thermoplastique.
